**Europäisches Patentamt**

**European Patent Office**

**Office européen des brevets**

(19)

(11) **EP 1 395 017 A1**

(12) **EUROPÄISCHE PATENTANMELDUNG**

(43) Veröffentlichungstag:
03.03.2004  Patentblatt 2004/10

(51) Int Cl.⁷: **H04L 29/06**, H04L 12/58

(21) Anmeldenummer: 03090219.1

(22) Anmeldetag: **16.07.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **02.09.2002  DE 10241092**

(71) Anmelder: **SIEMENS AKTIENGESELLSCHAFT
80333 München (DE)**

(72) Erfinder: **Roelands, Marc
2640 Mortsel (BE)**

(54) **Verfahren zum Bereitstellen von Präsenzanzeigedaten**

(57)     Die Erfindung betrifft ein Verfahren zum Bereitstellen von einem Nutzer (NU1) zugeordneten Präsenzanzeigedaten (PAD1) zur Anzeige auf einem Kommunikationsendgerät (KEG1), bei dem mindestens einen vorgewählten Teilnehmer betreffende Präsenzdaten (PD) für einen Präsenzrechner (PR) zugreifbar vorgehalten werden, anhand einer dem Nutzer (NU1) zugeordneten Verarbeitungsanweisung (V1) unter Verarbeitung der Präsenzdaten (PD) die Präsenzanzeigedaten (PAD1) erstellt werden, und die Präsenzanzeigedaten (PAD1) in einem Anzeigespeicher (AS) abgelegt werden.

FIG 2

**Beschreibung**

Die Erfindung betrifft ein Verfahren zum Bereitstellen von Präsenzanzeigedaten zur Anzeige auf einem Kommunikationsendgerät.

Aus der Druckschrift 3GPP TS 23.141 V0.0.0. "3rd.Generation Partnership Project; Technical Specification Group Services and System Aspects; Presence Service; Architecture and Functional Description (Release 6)" vom Juni 2002 ist ein "Präsenz-Service" (Presence Service) genannter Dienst bekannt, bei dem mittels eines Präsenzrechners (Presence Server) Eigenschaften von ausgewählten Kommunikationsteilnehmern überwacht werden. Zu solchen Eigenschaften gehören beispielsweise die jeweils aktuelle Erreichbarkeit über Telefon, schriftliche Kurznachrichten (SMS) oder Email. Informationen über derartige Eigenschaften werden von dem Präsenzrechner gesammelt und in Form von Präsenzdaten gespeichert. Anhand der Zugehörigkeit eines Dienstnutzers zu Blockierlisten, persönlichen Zugriffslisten oder allgemeinen Zugriffslisten werden aus den Präsenzdaten Präsenzanzeigedaten ausgewählt und zu einem Kommunikationsendgerät des Dienstnutzers übertragen.

Der Erfindung liegt die Aufgabe zugrunde, ein vielseitig anwendbares Verfahren zum Bereitstellen von Präsenzanzeigedaten anzugeben.

Diese Aufgabe wird erfindungsgemäß gelöst durch ein Verfahren zum Bereitstellen von einem Nutzer zugeordneten Präsenzanzeigedaten zur Anzeige auf einem Kommunikationsendgerät, bei dem mindestens einen vorgewählten Teilnehmer betreffende Präsenzdaten für einen Präsenzrechner zugreifbar vorgehalten werden, anhand einer einem Nutzer zugeordneten Verarbeitungsanweisung unter Verarbeitung der Präsenzdaten die Präsenzanzeigedaten erstellt werden, und die Präsenzanzeigedaten in einem Anzeigespeicher abgelegt werden, wodurch die Präsenzanzeigedaten bei einem kommunikationsendgeräteseitigen Abruf unmittelbar nach Auslesen aus dem Anzeigespeicher zu dem Kommunikationsendgerät übertragbar sind. Dabei ist es insbesondere vorteilhaft, dass durch Verwendung der dem Nutzer zugeordneten Verarbeitungsanweisung Präsenzanzeigedaten bereitgestellt werden können, welche individuell auf den Nutzer zugeschnitten sind und somit beispielsweise an Eigentümlichkeiten des Kommunikationsendgerätes des Nutzers angepasst werden können. Darüber hinaus kann durch eine entsprechende Ausgestaltung der Verarbeitungsanweisungen einem Datenschutzbedürfnis des Teilnehmers entsprochen werden, da der Nutzer lediglich die verarbeiteten Präsenzanzeigedaten, nicht jedoch die ursprünglichen Präsenzdaten über das Kommunikationsendgerät angezeigt erhält. Weiterhin ist besonders vorteilhaft, dass die vollständig erstellten Präsenzanzeigedaten in dem Anzeigespeicher abgespeichert werden, dadurch ist bei einer Abforderung der Präsenzanzeigedaten durch das Kommunikationsendgerät des Nutzers ein schneller Beginn der Datenübertragung zu realisieren. Dies stellt besonders dann einen Vorteil dar, wenn die Verarbeitung der Präsenzdaten zeitaufwändig ist.

Das Verfahren kann so ablaufen, dass die Verarbeitung eine Übernahme von ausgewählten Präsenzdaten in die Präsenzanzeigedaten umfasst.

Das erfindungsgemäße Verfahren kann auch so ablaufen, dass die Verarbeitung ein Verändern von ausgewählten Präsenzdaten und eine Übernahme der veränderten Präsenzdaten in die Präsenzanzeigedaten umfasst. Vorteilhafterweise können hierbei bei einer entsprechenden Verarbeitungsanweisung die Präsenzdaten verändert werden, bevor sie als Präsenzanzeigedaten abgespeichert werden. Dadurch können die Präsenzanzeigedaten so angepasst werden, dass beispielsweise ein Abspeichern von für die Anzeige auf dem Kommunikationsendgerät unvorteilhaften oder ungeeigneten Daten vermieden wird.

Das erfindungsgemäße Verfahren kann auch so ablaufen, dass das Verändern der Präsenzdaten erfolgt, indem ein Vergleich der Präsenzdaten mit in einer Datensammlung abgelegten Sammlungspräsenzdaten durchgeführt wird, und bei einem positiven Vergleichsergebnis (z.B. bei einer Übereinstimmung der Präsenzdaten mit den Sammlungspräsenzdaten) den Sammlungspräsenzdaten zugeordnete Zuordnungsdaten als veränderte Präsenzdaten verwendet werden.

Dabei kann vorzugsweise durch den Vergleich der Präsenzdaten mit den Sammlungspräsenzdaten eine Klassifikation oder Zuordnung der Präsenzdaten zu übergeordneten Datenkomplexen erreicht werden. Dadurch lässt sich vorteilhafterweise beispielsweise eine große Datenmenge an Präsenzdaten durch eine kleine Datenmenge an Zuordnungsdaten ersetzen. Dadurch kann der Aufwand für die Speicherung der Präsenzanzeigedaten in dem Anzeigespeicher, für die Übertragung der Präsenzanzeigedaten zu dem Kommunikationsendgerät und für die Anzeige auf diesem Kommunikationsendgerät deutlich reduziert werden und damit sowohl der Präsenzrechner als auch das Kommunikationsendgerät und ein den Präsenzrechner mit dem Kommunikationsendgerät verbindendes Kommunikationsnetz entlastet werden.

Das erfindungsgemäße Verfahren kann auch so ablaufen, dass das Verändern der Präsenzdaten erfolgt, indem in zweiwertiger Form vorliegende Präsenzdaten invertiert werden, und als geänderte Präsenzdaten die invertierten Präsenzdaten verwendet werden.

Das erfindungsgemäße Verfahren kann auch so ablaufen, dass das Verändern der Präsenzdaten erfolgt, indem Präsenzdaten durch vorbestimmte Präsenzdaten ersetzt werden, und als geänderte Präsenzdaten die vorbestimmten Präsenzdaten verwendet werden. Bei Anwendung der beiden zuletzt genannten Ausgestaltungsformen des erfindungsgemäßen Verfahrens können vorteilhafterweise die wahren Präsenzdaten vor einem Dienstnutzer verborgen werden; dadurch kann ein Schutz der Privatsphäre des Teilnehmers erreicht werden.

Das erfindungsgemäße Verfahren kann so ausgestaltet werden, dass die Präsenzanzeigedaten dann erstellt werden, wenn eine Veränderung der für den Präsenzrechner vorgehaltenen Präsenzdaten auftritt. Das erfindungsgemäße Verfahren kann auch so ausgestaltet werden, dass die Präsenzanzeigedaten dann erstellt werden, wenn eine Veränderung der in einem Anweisungsspeicher vorgehaltenen Verarbeitungsanweisungen auftritt. Mit diesen Verfahrensausgestaltungen wird vorzugsweise erreicht, dass stets aktuelle Präsenzanzeigedaten im Anzeigespeicher zur Verfügung stehen und bei einer Abfrage schnell an das Kommunikationsendgerät übertragen werden können.

Das erfindungsgemäße Verfahren kann auch so ablaufen, dass eine Mehrzahl an verschiedenen Präsenzanzeigedaten anhand einer Mehrzahl an Verarbeitungsanweisungen erstellt wird, wobei jede dieser Verarbeitungsanweisungen einem Nutzer zugeordnet ist, und diese Mehrzahl an Präsenzanzeigedaten in dem Anzeigespeicher abgelegt wird. Dadurch ist es möglich, Präsenzanzeigedaten für eine große Zahl an Verfahrensnutzern, von denen möglicherweise in Zukunft ein Datenabruf zu erwarten ist, in einem übertragungsfertigen Zustand in dem Anzeigespeicher vorrätig zu halten.

Das Verfahren kann auch so ablaufen, dass für einen Nutzer verschiedene Verarbeitungsanweisungen in dem Anweisungsspeicher vorgehalten werden, und aus diesen verschiedenen Verarbeitungsanweisungen die eine aktuell zu verwendende Verarbeitungsanweisung ermittelt wird, indem den verschiedenen Verarbeitungsanweisungen zugeordnete, sich jeweils unterscheidende Kennungen verglichen werden mit einer Teilnehmerkennung, welche bei dem Präsenzrechner vorliegt und einen aktuell gültigen Teilnehmerstatus des Teilnehmers beschreibt. Dadurch können situationsabhängig verschiedene Verarbeitungsanweisungen genutzt werden, so dass in Abhängigkeit von einem Status des Teilnehmers verschiedene Präsenzanzeigedaten für die Nutzer bereitgestellt werden können. Dadurch ist ein außerordentlich flexibles Verfahren realisierbar.

Das Verfahren kann so ablaufen, dass die Teilnehmerkennung seitens des Präsenzrechners von einem Präsenz-Kommunikationsendgerät des Teilnehmers empfangen wird, wobei die Teilnehmerkennung an dem Präsenz-Kommunikationsendgerät eingebbar ist. Diese Ausgestaltung des Verfahrens ermöglicht eine besonders einfache Ermittlung der Teilnehmerkennung auf Seiten des Präsenzrechners.

Das Verfahren kann auch derart ablaufen, dass die Teilnehmerkennung durch den Präsenzrechner ermittelt wird, indem ein vorbestimmtes Präsenzdatum auf eine vorbestimmte Änderung hin überwacht wird, und bei Auftreten dieser Änderung ein Vorliegen der Teilnehmerkennung erkannt wird. Bei dieser Ausgestaltungsform des erfindungsgemäßen Verfahrens kann die Teilnehmerkennung vorteilhafterweise automatisch aufgrund des Auftretens von Änderungen vorbestimmter Präsenzdaten ermittelt werden. Derartige Änderungen können also vorzugsweise dazu verwendet werden, den aktuellen Status des Teilnehmers und damit dessen Teilnehmerkennung zu bestimmen.

Das erfindungsgemäße Verfahren kann auch so ausgestaltet werden, dass nach Ermittelung der Teilnehmerkennung von dem Präsenzrechner der Teilnehmerkennung zugeordnete Präsenzdaten geändert werden, woraufhin ein erneutes Erstellen der Präsenzanzeigedaten durchgeführt wird. Dadurch kann vorteilhafterweise eine Veränderung der Präsenzdaten dann erreicht werden, wenn sich der Status und damit die Teilnehmerkennung des Teilnehmers geändert hat, so dass diese dynamischen Veränderungen unmittelbar zu angepassten und aktuellen Präsenzdaten führen .

Zur weiteren Erläuterung des erfindungsgemäßen Verfahrens ist in

> Figur 1 eine schematische Darstellung eines Ausführungsbeispiels des erfindungsgemäßen Verfahrens, in
> Figur 2 eine schematische Darstellung eines Ausführungsbeispiels der in einem Präsenzrechner ablaufenden Verfahrensschritte, in
> Figur 3 eine schematische Darstellung eines weiteren Ausführungsbeispiels der in einem Präsenzrechner ablaufenden Verfahrensschritte, in
> Figur 4 eine schematische Darstellung eines weiteren Ausführungsbeispiels der in einem Präsenzrechner ablaufenden Verfahrensschritte und in
> Figur 5 eine schematische Darstellung eines weiteren Ausführungsbeispiels von in dem Präsenzrechner ablaufenden Verfahrensschritten dargestellt.

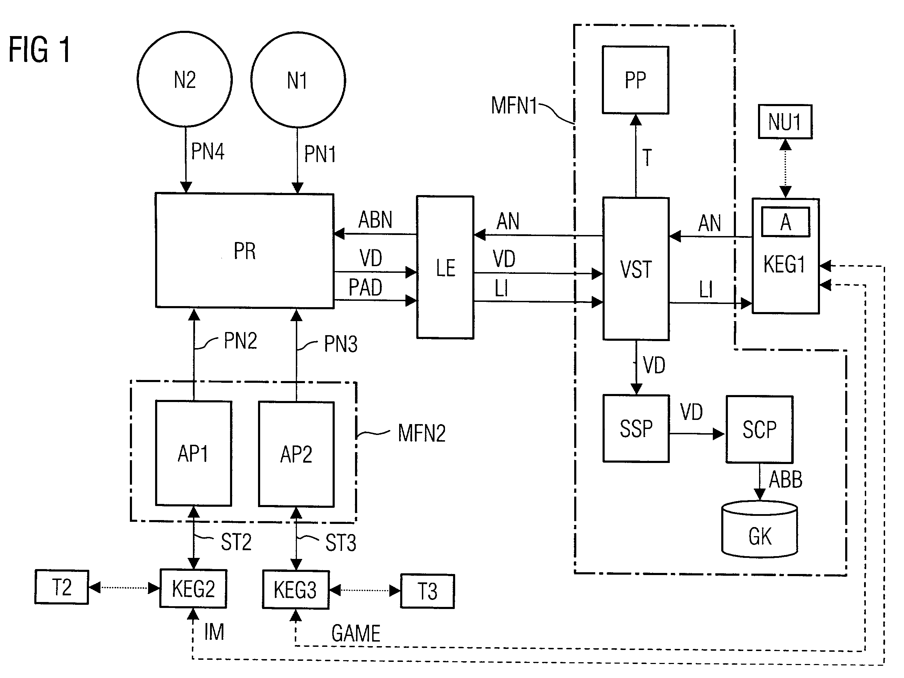

In Figur 1 ist auf der rechten Seite ein Kommunikationsendgerät KEG1 mit einer Anzeige A dargestellt, welches einem Nutzer NU1 eines Präsenzdienstes zugeordnet ist. Dieses Kommunikationsendgerät KEG1 und auch im folgenden genannte weitere Kommunikationsendgeräte können beispielsweise durch ein Mobiltelefon, einen Palmtop, einen tragbaren Rechner oder einen Personalcomputer mit Mobilfunkschnittstelle realisiert sein. Das Kommunikationsendgerät KEG1 ist über ein Mobilfunknetz MFN1 mit einer Listenerzeugungseinrichtung LE verbunden. Von dem Mobilfunknetz MFN1 ist lediglich eine Vermittlungsstelle VST, eine Gebührennacherhebungseinrichtung PP (Post Processing-Vergebührungseinrichtung), ein Dienstevermittlungspunkt SSP (SSP = Service Switching Point), ein Dienststeuerungspunkt SCP (SCP = Service Control Point) und ein Guthabenkonto GK dargestellt.

Wenn seitens des ersten Kommunikationsendgerätes KEG1 Informationen über weitere Kommunikationsendgeräte bzw. über diese weiteren Kommunikationsendgeräte nutzende Teilnehmer benötigt werden (beispielsweise Informationen über die weiter unten beschriebenen weiteren Kommunikationsendgeräte KEG2 oder KEG3 bzw. über diesen weiteren Kommunikationsendgeräten zugeordnete Teilnehmer T2 oder T3), dann sendet das erste Kommunikationsendgerät KEG1 eine Anforderungsnachricht AN über die Vermittlungsstelle VST an die Listenerzeugungseinrichtung LE. Diese Anforderungsnachricht AN enthält die Information, dass das erste Kommunikationsendgerät KEG1 Präsenzinformationen über die oben genannten weiteren Kommunikationsendgeräte bzw. deren Teilnehmer benötigt. Nach Erhalt der Anforderungsnachricht AN erzeugt die Listenerzeugungseinrichtung LE eine Abrufnachricht ABN und sendet diese Abrufnachricht an einen Präsenzrechner PR, wodurch diese Präsenzinformationen von dem Präsenzrechner PR abgerufen werden.

Derartige Präsenzrechner PR als solche sind bekannt und beispielsweise in der eingangs genannten Druckschrift beschrieben. Der Präsenzrechner PR überwacht Personen bzw. deren Kommunikationsendgeräte (im Beispiel die weiteren Kommunikationsendgeräte KEG2 und KEG3) und sammelt Präsenzdaten über diese Personen und weiteren Kommunikationsendgeräte bzw. bekommt die Präsenzdaten zugesendet.

In diesem Ausführungsbeispiel erreichen mit Präsenzdaten versehene Präsenznachrichten PN1 bis PN4 den Präsenzrechner. Die mit der Präsenznachricht PN1 übertragenen Präsenzdaten stammen aus einem Mobilfunknetz N1 der zweiten Generation (also beispielsweise aus einem nach dem GSM-Standard arbeitenden Mobilfunknetz, GSM = Global System for Mobile Communication). Solche Präsenzdaten können beispielsweise die Information enthalten, welche - in der Figur 1 nicht dargestellten - weiteren Kommunikationsendgeräte derzeit bei dem Mobilfunknetz N1 angemeldet (eingebucht) sind oder zu welchen weiteren Kommunikationsendgeräten aktuell über das Netz N1 Mobilfunkverbindungen aufgebaut werden können. Die Präsenzdaten der Präsenznachricht PN4 stammen von einem Mobilfunknetz N2 der dritten Generation, also z.B. von einem nach dem UMTS-Standard (UMTS = Universal Mobile Telecommunications System) oder nach dem GPRS-Standard (GPRS = General Packet Radio Service) arbeitenden Mobilfunknetz. Diese mittels der Präsenznachricht PN4 übertragenen Präsenzdaten können beispielsweise die Information umfassen, welche weitere Kommunikationsendgeräte über das Mobilfunknetz N2 aktuell erreichbar sind.

Die weiteren Kommunikationsendgeräte KEG2 und KEG3 (die auch als Präsenz-Kommunikationsendgeräte KEG2 und KEG3 bezeichnet werden können, da sie Präsenzinformationen über Teilnehmer T2 und T3 liefern) sind an das zweite Kommunikationsnetz MFN2 angeschlossen, von dem lediglich schematisch zwei Dienstrechner AP1 und AP2 dargestellt sind. Auf dem Dienstrechner AP1 läuft in diesem Ausführungsrechner ein Instant-Messaging-Dienst (d.h. eine Applikation, ein Rechnerprogramm, welches es dem Kommunikationsendgerät KEG2 ermöglicht, Instant-Messaging-Nachrichten zu senden und zu empfangen). Sobald mittels des Kommunikationsendgerätes KEG2 diese Instant-Messaging-Applikation auf dem ersten Dienstrechner AP1 gestartet ST2 wird (d.h. sobald das Kommunikationsendgerät KEG2 über Instant-Messaging (Instant-Messaging = IM) erreichbar ist), wird diese Information als Präsenzdatum mittels der Präsenznachricht PN2 an den Präsenzrechner PR übertragen.

Das weitere Kommunikationsendgerät KEG3 startet ST3 in diesem Ausführungsbeispiel auf dem zweiten Dienstrechner AP2 eine Online-Spiel-Applikation (z.B. ein Computerprogramm, welches es verschiedenen Kommunikationsendgeräten ermöglicht, online über das Kommunikationsnetz MFN2 zu spielen). Da ab dem Zeitpunkt des Programmstarts das weitere Kommunikationsendgerät KEG3 über das Online-Spiel erreichbar ist und eine Kommunikationsverbindung über das Online-Computerspiel zu dem Kommunikationsendgerät KEG3 hergestellt werden kann, wird eine Information über den Start des Spielprogramms als Präsenzdatum mittels der Präsenznachricht PN3 von dem zweiten Kommunikationsnetz MFN2 an den Präsenzrechner PR übertragen. Derartige Präsenznachrichten können auch direkt von weiteren Kommunikationsendgeräten über das Mobilfunknetz MFN2 an den Präsenzrechner gesendet werden. Sämtliche den Präsenzrechner erreichenden Präsenzdaten werden in diesem gespeichert.

Es soll ausdrücklich darauf hingewiesen werden, dass das erfindungsgemäße Verfahren nicht nur unter Verwendung von mit Mobilfunknetzen verbundenen Kommunikationsendgeräten, sondern auch unter Verwendung von anderen Kommunikationsendgeräten, beispielsweise leitungsgebundenen Kommunikationsendgeräten unter Benutzung von leitungsgebundenen Kommunikationsnetzen, durchgeführt werden kann. Als Kommunikationsendgeräte können also z.B. auch leitungsgebundene Telefone oder an das Internet angeschlossene Rechner genutzt werden.

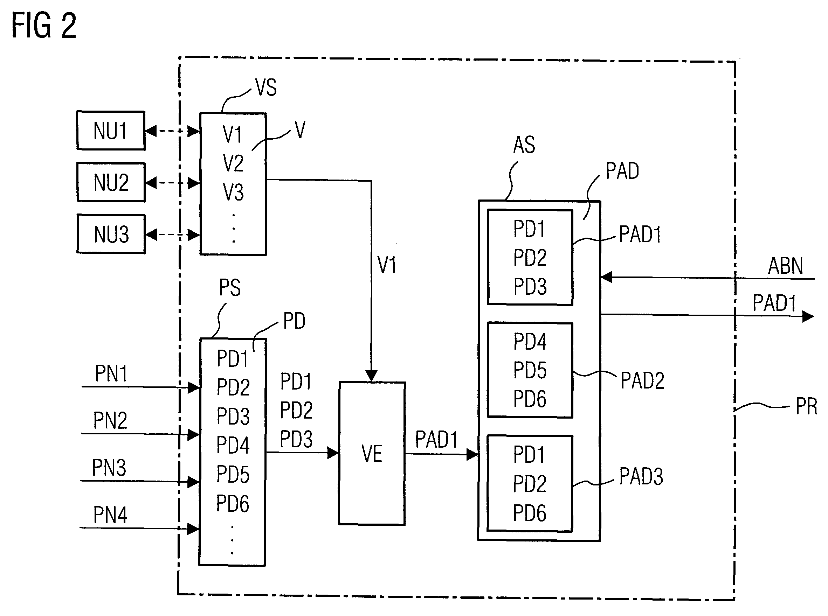

Die im Präsenzrechner PR ablaufenden Vorgänge werden später mit Hilfe der Figuren 2 bis 5 detailliert erläutert. Im Ergebnis dieser Vorgänge werden auf ein Eintreffen der Abforderungsnachricht ABN hin nutzerspezifische Präsenzanzeigedaten PAD von dem Präsenzrechner an die Listenerzeugungseinrichtung LE gesendet. Die Listenerzeugungseinrichtung LE erzeugt aus den nutzerspezifischen Präsenzanzeigedaten PAD eine Liste LI, welche ein auf der Anzeigeeinheit A des Kommunikationsendgerätes KEG1 darstellbares Format aufweist. Diese Liste LI wird über die Vermittlungsstelle VST an das Kommunikationsendgerät KEG1 gesendet und auf dessen Anzeigeeinheit A ausgegeben.

Bei der Erstellung der Präsenzanzeigedaten PAD erzeugt der Präsenzrechner PR Vergebührungsdaten VD, welche Art und Umfang der erstellten Präsenzanzeigedaten PAD betreffen und eine Belastung des Kommunikationsendgerätes KEG1 bzw. des Nutzers NU1 dieses ersten Kommunikationsendgerätes ermöglichen. Zur Erstellung der Vergebührungsdaten VD ermittelt und protokolliert der Präsenzrechner PR verschiedene die Erstellung der Präsenzanzeigedaten PAD betreffende Merkmale. Insbesondere können zur Erzeugung der Vergebührungsdaten VD herangezogen werden:

- die Anzahl bzw. der Umfang der per Abrufnachricht ABN bestimmten Präsenzinformationen
- die Art der von den weiteren Kommunikationsendgeräten benutzten Applikationen (z.B. die Programme auf dem ersten Dienstrechner AP1 oder auf dem zweiten Dienstrechner AP2)
- der Umfang der Präsenzanzeigedaten PAD
- der Typ des ersten Kommunikationsendgerätes KEG1
- Häufigkeit des Auftretens neuer, aktualisierter Präsenzdaten
- Anzahl der vom Präsenzserver bereitgestellten Präsenzinformationen pro weiterem Kommunikationsendgerät

Aus diesen beispielhaft genannten Merkmalen wird von dem Präsenzrechner PR ein Belastungsbetrag ermittelt, mit welchen das Kommunikationsendgerät KEG1 bzw. der Nutzer dieses Kommunikationsendgerätes belastet wird. Dabei kann der mit den Vergebührungsdaten VD zu übertragende Betrag ermittelt werden durch Summation von Einzelvergebührungsbeträgen, die jedem der oben genannten Merkmale zugeordnet sind. Alternativ kann für die Benutzung des Verfahrens zum Bereitstellen von Präsenzanzeigedaten auch ein pauschaler Betrag vorgesehen werden, welcher als Vergebührungsdaten VD erzeugt und verarbeitet wird.

In einer ersten Ausgestaltungsform des Verfahrens werden die Vergebührungsdaten VD von dem Präsenzrechner über die Listenerzeugungseinrichtung LE an die Vermittlungsstelle VST des ersten Kommunikationsnetzes MFN1 übermittelt. Die Vermittlungsstelle VST erzeugt daraufhin den Vergebührungsdaten zugehörige Gebührentickets T und sendet diese an eine Gebührennacherhebungseinrichtung in Form einer Postpaid-Rechnungserstellungseinrichtung PP. Derartige Rechnungserstellungseinrichtungen als solche sind in Mobiltelefonnetzen bekannt und dienen zur Erstellung der z.B. monatlich zu versendenden Gebührenrechnungen für die geführten Mobiltelefonate. Über eine derartige Gebührennacherhebungseinrichtung wird nach Empfang der Gebührentickets T der Dienst der Bereitstellung der Präsenzanzeigedaten PAD für das erste Kommunikationsendgerät KEG1 abgerechnet.

Bei einer zweiten Ausgestaltungsform werden die Vergebührungsdaten VD über die Vermittlungsstelle VST an den Dienstevermittlungspunkt SSP des als Intelligentes Netz ausgestalteten ersten Kommunikationsnetzes MFN1 gesendet. Der Dienstevermittlungspunkt SSP startet einen Gebührenabrechnungsdienst auf dem ihm zugeordneten Dienstesteuerungspunkt SCP und sendet die Vergebührungsdaten VD an diesen Dienstesteuerungspunkt SCP. Der Dienstesteuerungspunkt führt ein Guthabenkonto GK, welches dem ersten Kommunikationsendgerät KEG1 zugeordnet ist und veranlasst eine Abbuchung ABB des entsprechenden Gebührenbetrages von dem Guthabenkonto GK. Das Verwalten und Führen von Guthabenkonten in Mobilfunknetzen an sich ist bekannt und wird als Prepaid-Gebührenabrechnung bezeichnet.

In Figur 2 sind die bei dem Präsenzrechner PR ablaufenden Vorgänge näher erläutert. Die mittels der Präsenznachrichten PN1 bis PN4 zu dem Präsenzrechner PR übertragenen Präsenzdaten PD werden für den Präsenzrechner zugreifbar vorgehalten, indem die Präsenzdaten PD in einem Präsenzdatenspeicher PS des Präsenzrechners abgespeichert und dort zur weiteren Verarbeitung bereitgehalten werden (Die Präsenzdaten können in einem anderen Ausführungsbeispiel jedoch auch in einem Präsenzdatenspeicher vorgehalten werden, welcher außerhalb des Präsenzrechners PR angeordnet ist und auf den der Präsenzrechner mittels Datenabfragenachrichten zugreifen kann. Die Präsenzdaten können auch auf mehrere Netzknoten eines Kommunikationsnetzes verteilt vorliegen). Beispielhaft sind in dem Präsenzdatenspeicher PS die Präsenzdaten PD1 bis PD6 dargestellt. In einem Anweisungsspeicher VS sind Verarbeitungsanweisungen V abgespeichert, von denen beispielhaft drei Verarbeitungsanweisungen V1, V2 und V3 dargestellt sind. Diese Verarbeitungsanweisungen enthalten Informationen über diejenigen Verarbeitungsschritte, welche von einer Verarbeitungseinheit VE durchgeführt werden sollen, um aus den Präsenzdaten PD Präsenzanzeigedaten PAD zu erzeugen; die Verarbeitungsanweisungen beschreiben also die Art der Verarbeitung. Die Verarbeitungsanweisungen V sind jeweils einem Nutzer des Präsenzdienstes zugeordnet, beispielsweise ist die Verarbeitungsanweisung V1 dem in der Figur 1 dargestellten ersten Nutzer NU1 zugeordnet, die Verarbeitungsanweisung V2 einem weiteren Nutzer NU2 und die Verarbeitungsanweisung V3 einem dritten Nutzer NU3.

Die erste in dem Anweisungsspeicher VS gespeicherte Verarbeitungsanweisung V1 wird nun aus dem Anweisungsspeicher VS ausgelesen und zu der Verarbeitungseinheit VE übertragen. Die Verarbeitungseinheit VE liest entsprechend den Instruktionen der Verarbeitungsanweisung V1 die Präsenzdaten PD1, PD2 und PD3 aus dem Präsenzdatenspeicher PS aus und erzeugt (in diesem bewusst einfach gehaltenen Beispiel) erste Präsenzanzeigedaten PAD1, welche lediglich die genannten Präsenzdaten PD1, PD2 und PD3 enthalten. Diese Art der Verarbeitung der Präsensdaten PD beschränkt sich also auf ein Übernehmen (Kopieren) der Präsenzdaten aus dem Präsenzdatenspeicher in einen Präsenzanzeigedatensatz PAD1. Im Anschluss daran werden die Präsenzanzeigedaten PAD1 in einem Anzeigespeicher AS abgelegt. Dieser Vorgang wird mit der zweiten Verarbeitungsanweisung V2 in analoger Form wiederholt; die Verarbeitungseinheit VE erstellt nun einen Datensatz mit zweiten Präsenzanzeigedaten PAD2, welche die Präsenzdaten PD4, PD5 und PD6 enthalten. Schließlich werden unter Benutzung der dritten Verarbeitungsanweisung V3 dritte Präsenzanzeigedaten PAD3 erzeugt und ebenfalls in dem Anzeigespeicher AS abgelegt. Ähnliche Verfahrensschritte werden in analoger Form für alle diejenigen Nutzer wiederholt, die an dem Dienst der Präsenzanzeigedatenerstellung teilnehmen und für die Präsenzdaten gesammelt und Präsenzanzeigedaten bereitgestellt werden.

Wenn nun von dem in Figur 1 dargestellten Kommunikationsendgerät KEG1 des Nutzers NU1 Präsenzinformationen angefordert werden und daraufhin die Abrufnachricht ABN den Präsenzrechner PR erreicht, dann wird aufgrund einer in der Abrufnachricht enthaltenen Nutzerinformation erkannt, dass die Abrufnachricht ABN auf eine Anforderung AN des Nutzers NU1 zurückgeht. Daraufhin werden die Präsenzanzeigedaten PAD1 (die unter Benutzung der dem ersten Nutzer zugeordneten Verarbeitungsanweisung V1 erstellt wurden) ohne nennenswerten Zeitverzug an die Listenerzeugungseinrichtung LE zur Erzeugung der ansprechenden Liste LI übertragen. Insbesondere bei zeitaufwändigen Erstellungsschritten in der Verarbeitungseinheit VE kann durch das beschriebene Verfahren erreicht werden, dass mit einer kaum merklichen Zeitverzögerung, also in Echtzeit (real time), die abgerufenen Präsenzanzeigedaten PAD1 an die Listenerzeugungseinrichtung LE abgesandt werden. Eine leistungsfähige Listenerstellungseinrichtung vorausgesetzt, wird eine Liste mit den Informationen aus den Präsenzanzeigedaten PAD1 das Kommunikationsendgerät KEG1 sehr schnell erreichen.

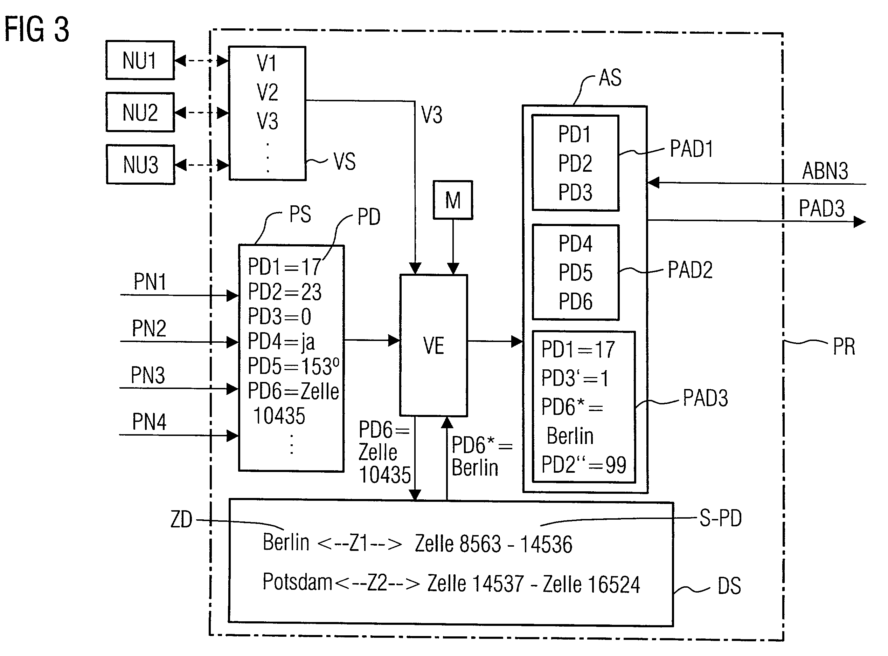

In Figur 3 ist ein weiteres Ausführungsbeispiel für in dem Präsenzrechner PR ablaufende Verfahrensschritte dargestellt. Die in dem Präsenzdatenspeicher PS vorliegenden Präsenzdaten PD1 bis PD6 sind in dieser Figur mit Werten versehen dargestellt. Das Präsenzdatum PD1 weist den Wert 17 auf, dem Präsenzdatum PD2 ist ein Wert 23 zugeordnet. Das Präsenzdatum PD3 liegt in zweiwertiger Form vor, d. h. das Präsenzdatum PD3 kann lediglich die Werte "0" und "1" annehmen. Aktuell hat das Präsenzdatum PD3 die Ausprägung "0". Auch das Präsenzdatum PD4 liegt in zweiwertiger Form vor, wobei dieses Präsenzdatum die beiden Ausprägungen "ja" und "nein" annehmen kann; aktuell weist das Präsenzdatum PD4 den Wert "ja" auf. Das Präsenzdatum PD5 enthält eine Ortsangabe in Form der geografischen Längenangabe "153 Grad". Das Präsenzdatum PD6 weist ebenfalls eine Ortsangabe auf in Form einer Nummer "10435" einer Zelle eines Mobilfunknetzes.

In diesem Ausführungsbeispiel soll beschrieben werden, wie nach einer Veränderung der Präsenzdaten PD Präsenzanzeigedaten PAD3 erzeugt und in dem Anzeigespeicher AS abgespeichert werden. Da die Präsenzanzeigedaten PAD3 für einen Nutzer NU3 bestimmt sind, wird aus dem Anweisungsspeicher VS die Verarbeitungsanweisung V3 ausgelesen und zu der Verarbeitungseinheit VE transportiert. Die Verarbeitungsanweisung V3 enthält die Information, dass die Präsenzanzeigedaten PAD3 vier Einträge enthalten, welche auf die folgende Art und Weise gebildet werden:

- Der erste Bestandteil der Präsenzanzeigedaten PAD3 wird gebildet durch die Präsenzdaten PD1, welche unverändert aus dem Präsenzdatenspeicher PS übernommen (kopiert) und in den Datensatz PAD3 eingefügt werden.

- Der zweite Bestandteil der Präsenzanzeigedaten PAD3 wird dadurch erstellt, dass von der Verarbeitungseinheit VE das Präsenzdatum PD3 = 0 aus dem Präsenzdatenspeicher ausgelesen wird. Eine Verarbeitung dieses Präsenzdatums PD3 wird dergestalt durchgeführt, dass der Wert "0" des Präsenzdatums PD3 invertiert wird (durch diese Invertierung entsteht der Wert "1"). Das derart veränderte Präsenzdatum PD3'=1 wird als zweiter Bestandteil in den Datensatz der Präsenzanzeigedaten PAD3 eingefügt.

- Der dritte Bestandteil der Präsenzanzeigedaten PAD3 wird erstellt durch eine Verarbeitung des Präsenzdatums PD6 des Präsenzdatenspeichers PS. Dieses Präsenzdatum PD6 weist einen Wert in Form der Information "Zelle 10435" auf. Dies ist eine Zelle eines Mobilfunknetzes, in dem sich ein überwachtes weiteres Kommunikationsendgerät aktuell befindet. Da diese Information des Präsenzdatums PD6 für einen Verfahrensnutzer wenig aussagekräftig ist, wird bei der Verarbeitung in der Verarbeitungseinheit VE dieses Präsenzdatum verändert. Dazu greift die Verarbeitungseinheit VE auf eine Datensammlung DS zu, welche beispielsweise in einer Datenbank des Präsenzrechners PR abgelegt ist. Das Präsenzdatum PD6 wird mit den in der Datensammlung DS abgespeicherten Sammlungspräsenzdaten S-PD verglichen. Dabei wird festgestellt, dass der Wert des Präsenzdatums PD6 "Zelle 10435" innerhalb eines Bereiches "Zelle 8563 bis Zelle 14536" der Sammlungspräsenzdaten S-PD liegt, das also ein positives Vergleichsergebnis vorliegt. Ein solches positives Vergleichsergebnis kann also z.B. dann vorliegen, wenn das Präsenzdatum innerhalb eines durch die Sammlungspräsenzdaten S-PD definierten Bereiches liegt (wie in Fig. 3 dargestellt). Ein solches positives Vergleichsergebnis kann auch dann vorliegen, wenn das Präsenzdatum mit einem Sammlungspräsenzdatum übereinstimmt. Dieser Fall kann insbesondere dann auftreten, wenn die Sammlungspräsenzdaten S-PD eine Aufzählung, eine Auflistung von einzelnen Daten beinhalten. Den Sammlungspräsenzdaten S-PD sind in dem Datenspeicher DS Zuordnungsdaten ZD in Form einer Zeichenkette "Berlin" zugeordnet (Zuordnung Z1). Diese Zuordnungsdaten ZD werden daraufhin aus der Datensammlung DS ausgelesen und als veränderte Präsenzdaten PD6*="Berlin" zu der Verarbeitungseinheit VE übertragen. Die Verarbeitungseinheit VE speichert nun dieses veränderte Präsenzdatum PD6* als dritten Eintrag in dem Datensatz Präsenzanzeigedaten PAD3 ab.

- Der vierte und letzte Bestandteil der Präsenzanzeigedaten PAD3 wird erstellt durch eine Verarbeitung des Präsenzdatums PD2 des Präsenzdatenspeichers PS. Das Präsenzdatum PD2 wird so verändert, dass sein Wert PD2=23 ersetzt wird durch einen vorbestimmten Wert PD2"=99, wobei dieser Wert PD2"=99 von der Verarbeitungseinheit VE aus einem Wertespeicher M ausgelesen wird. Das Präsenzdatum PD2 wird also verändert durch eine Ersetzung seines Wertes durch einen vorbestimmten Wert 99. Ein solcher vorbestimmter Wert für ein Präsenzdatum kann z.B. dem Nutzer NU3 zugeordnet sein kann und nutzerspezifisch verschiedene Werte annehmen. Ein solcher vorbestimmter Wert für ein Präsenzdatum kann aber auch nutzerunabhängig eine feste, statische Größe annehmen.

Damit ist die Verarbeitung der Präsenzdaten PD1, PD3, PD6 und PD2 zu den Präsenzanzeigedaten PAD3 abgeschlossen.

Nun kann bei Eintreffen einer weiteren Abrufnachricht ABN3 von einem Kommunikationsendgerät des Nutzers NU3 ohne Zeitverzug dieser Datensatz Präsenzanzeigedaten PAD3 an die Listenerzeugungseinrichtung LE abgesandt werden, worauf diese in bekannter Weise eine weitere Liste LI erzeugt und an das Kommunikationsendgerät des Nutzers NU3 überträgt.

Die Präsenzanzeigedaten PAD werden erstellt, sobald eine Veränderung der in dem Präsenzdatenspeicher PS abgespeicherten Präsenzdaten PD oder eine Veränderung der in dem Anweisungsspeicher VS abgespeicherten Verarbeitungsanweisungen V auftritt. Dann werden anhand sämtlicher Verarbeitungsanweisungen V des Anweisungsspeichers VS unter Verarbeitung der aktuell im Präsenzdatenspeiche PS vorliegenden Präsenzdaten PD sämtliche Präsenzanzeigedaten PAD erstellt, welche sich aufgrund der vorliegenden Verarbeitungsanweisungen V aus den Präsenzdaten PD erstellen lassen. Somit wird sichergestellt, dass sich sämtliche Präsenzanzeigedaten, deren Abruf mittels einer Abrufnachricht ABN möglich ist, stets in einem aktuellen Stand in dem Anzeigespeicher AS befinden.

In einer weiteren Ausgestaltungsform des erfindungsgemäßen Verfahrens werden nur diejenigen Präsenzanzeigedaten PAD bei Änderung der Verarbeitungsanweisungen oder der Präsenzdaten neu erstellt, welche direkt von der Änderung (beispielsweise nur einer aus vielen) Verarbeitungsanweisungen oder der Änderung eines oder mehrerer Präsenzdaten betroffen sind.

Folgende Beispiele sollen dies verdeutlichen: Sollte sich die Verarbeitungsanweisung V1 ändern, so wird aufgrund dieser Änderung lediglich das Präsenzanzeigedatum PAD1 neu erstellt und neu in dem Anzeigespeicher AS gespeichert, da die Verarbeitungsanweisung V1 lediglich Anweisungen zur Erzeugung des Präsenzanzeigedatums PAD1 enthält.

Sollte sich jedoch das Präsenzdatum PD1 des Präsenzdatenspeichers PS ändern, so würden mittels der Verarbeitungsanweisung V1 neue Präsenzanzeigedaten PAD1 erzeugt, da das Präsenzdatum PD1 entsprechend der Anweisung V1 in die Präsenzanzeigedaten PAD1 übernommen wird. Es werden aber auch neue Präsenzanzeigedaten PAD3 unter Benutzung der Verarbeitungsanweisung V3 erzeugt und neu in dem Anzeigespeicher AS abgespeichert, da auch in den Präsenzanzeigedaten PAD3 das nunmehr veränderte Präsenzdatum PD1 enthalten ist.

Dadurch wird erreicht, dass für sämtliche vorliegenden Verarbeitungsanweisungen V1 bis V3 zu jedem Zeitpunkt die verschiedenen Präsenzanzeigedaten PAD1, PAD2 und PAD3 in einem jeweils aktuellen Zustand im Anzeigespeicher AS vorhanden sind und abrufbereit vorliegen.

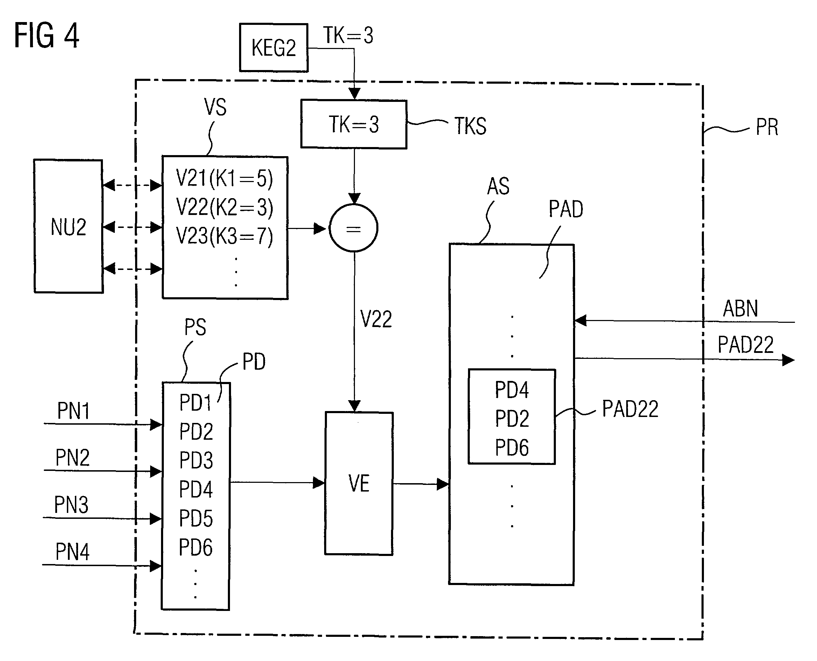

In Figur 4 ist ein weiteres Ausführungsbeispiel des Verfahrens beschrieben, bei dem in dem Anweisungsspeicher VS drei Verarbeitungsanweisungen V21, V22 und V23 abgespeichert sind, die alle drei einem Nutzer NU2 zugeordnet sind. Jede der drei Verarbeitungsanweisungen V21, V22 und V23 enthält Anweisungen zum Erstellen eines Präsenzanzeigedatensatzes PAD2 für den Nutzer NU2. Jeder dieser drei Verarbeitungsanweisungen ist eine Kennung K1, K2 und K3 zugeordnet, wobei die Kennungen K1, K2 bzw. K3 jeweils unterschiedliche Werte aufweisen. Im Beispiel ist der Verarbeitungsanweisung V21 eine Kennung K1 = 5, der Verarbeitungsanweisung V22 eine Kennung K2 = 3 und der Verarbeitungsanweisung V23 eine Kennung K3 = 7 zugeordnet.

Die Kennungen K1, K2 und K3 beschreiben einen Status eines Teilnehmers, in diesem Fall den Status des Teilnehmers T2, dem das weitere Kommunikationsendgerät KEG2 zugeordnet ist (vgl. Figur 1). Die Teilnehmerkennung K1 = 5 bedeutet, dass der Teilnehmer T2 sich an seinem Arbeitsplatz befindet; sein Teilnehmerstatus ist also "Arbeit". Die Kennung K2 = 3 steht für eine Situation, in der sich der Teilnehmer T2 mit seinem Kommunikationsendgerät KEG2 zu Hause befindet, sein aktuell gültiger Teilnehmerstatus ist also "Freizeit". Die Kennung K3 = 7 schließlich steht für einen Status "Sitzung - bitte nicht stören". In diesem Status befindet sich der Teilnehmer T2 dienstlich in einer Besprechung und ist nicht erreichbar.

Der Status, in dem sich ein Teilnehmer befindet, kann auch als ein "Präsenz-Kontext" oder ein "Teilnehmer-Kontext" bezeichnet werden. Dieser Status enthält nämlich in einer verallgemeinerten Form Informationen über die "Anwesenheit" (Präsenz) und die kommunikative Erreichbarkeit des Teilnehmers.

Der aktuell gültige Status, in dem sich der Teilnehmer T2 derzeit befindet, wird in diesem Ausführungsbeispiel von dem weiteren Kommunikationsendgerät KEG2 des Teilnehmers T2 an den Präsenzrechner PR übermittelt, indem eine Teilnehmerkennung TK, welche den Wert TK=3 annimmt, über das zweite Mobilfunknetz MFN2 zu dem Präsenzrechner PR übertragen wird. Die Teilnehmerkennung TK=3 wurde zuvor beispielsweise von dem Teilnehmer T2 über eine Tastatur des Kommunikationsendgerätes KEG2 eingegeben. Diese Teilnehmerkennung TK = 3 wird von dem Präsenzrechner PR empfangen und in einem Teilnehmerkennungsspeicher TKS des Präsenzrechners PR zwischengespeichert. Durch Vergleich des Wertes der Teilnehmerkennung TK = 3 mit den Kennungen der verschiedenen Verarbeitungsanweisungen V21, V22 und V23 wird die mit der Teilnehmerkennung korrespondierende Verarbeitungsanweisung (in diesem Falle die Verarbeitungsanweisung V22 mit der Kennung K2 = 3) ermittelt und an die Verarbeitungseinrichtung VE übertragen. Daraufhin kann die Verarbeitungseinrichtung unter Nutzung der Anweisung V22 in bekannter Weise die Präsenzanzeigedaten PAD2 erstellen und in dem Anzeigespeicher AS abspeichern.

Es können auch mehrere Verarbeitungsanweisungen (die verschiedenen Nutzern zugeordnet sind), dieselbe Kennung aufweisen. In der Bezeichnungsweise der Fig. 4 wäre z.B. möglich das Vorliegen von Verarbeitungsanweisungen V11 für den Nutzer NU1, V31 für den Nutzer NU3 und V43 für einen Nutzer NU4, die alle eine Kennung mit dem Wert "5" aufweisen.

Der durch die Teilnehmerkennung TK beschriebene, aktuell gültige Teilnehmerstatus kann auch als "Rolle" des Teilnehmers bezeichnet werden. Der Teilnehmer befindet sich also zu dem jeweiligen Zeitpunkt entweder in der Rolle eines Arbeitnehmers in seinem Büro, in der Rolle einer Privatperson, die ihre Freizeit zu Hause verbringt oder in der Rolle eines Sitzungsteilnehmers, der nicht durch ankommende Kommunikationswünsche gestört werden möchte.

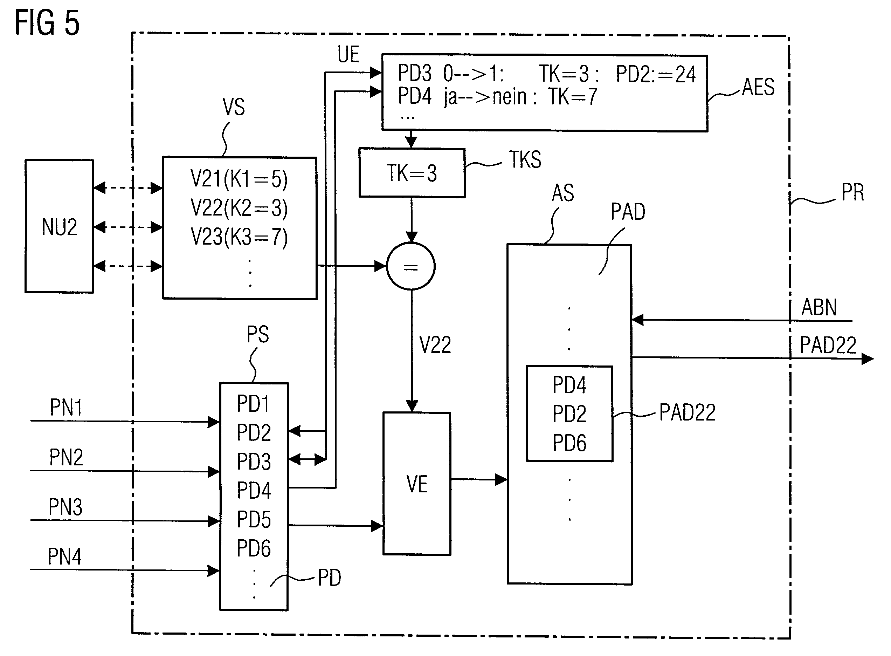

In Figur 5 ist eine weitere Möglichkeit dargestellt, wie die Teilnehmerkennung TK von dem Präsenzrechner PR anhand der Präsenzdaten PD ermittelt werden kann. Dazu sind in einem Änderungsspeicher AES des Präsenzrechners PR Änderungsregeln abgelegt, welche Informationen darüber beinhalten, dass bei einer vorbestimmten Änderung eines vorbestimmten Präsenzdatums ein vorbestimmter Teilnehmerstatus erkannt wird und demzufolge die Teilnehmerkennung auf einen vorbestimmten Wert gesetzt wird. Im Ausführungsbeispiel der Figur 5 ist in dem Änderungsspeicher AES eine Änderungsregel abgelegt, die folgende Form aufweist:

"PD3 0-->1: TK=3: PD2:=24"

Diese Änderungsregel enthält die Information, dass das Präsenzdatum PD3 zu überwachen ist auf einen Übergang von dem Wert PD3 = 0 auf den Wert PD3 = 1; tritt eine derartige Änderung des Präsenzdatums PD3 auf, dann ist die Teilnehmerkennung TK auf den Wert TK = 3 zu setzen. Die Bedeutung des Ausdrucks "PD2:=24" wird weiter unten erläutert. Der Präsenzrechner PR ermittelt also selbsttätig durch eine Überwachung UE des Präsenzdatums PD3, ob und wann ein Teilnehmerstatus auftritt, welcher durch die Teilnehmerkennung TK=3 gekennzeichnet wird. Bei Auftreten dieser zu überwachenden Änderung wird die Teilnehmerkennung auf den Wert TK = 3 gesetzt und der entsprechende Wert TK = 3 in dem Teilnehmerkennungsspeicher TKS gespeichert. Der weitere Ablauf entspricht dem im Zusammenhang mit der Figur 4 beschriebenen Ablauf.

Der bereits oben erwähnte Teil "PD2:=24" der Änderungsregel des Änderungsspeichers AES beinhaltet die Information, dass bei einem Auftreten der Teilnehmerkennung TK=3 das Präsenzdatum PD2 auf den Wert 24 zu setzen ist. Dies bedeutet, dass bei Erkennung eines neuen aktuellen Teilnehmerstatus des Teilnehmers einzelne Präsenzdaten geändert werden. Dadurch können die Präsenzdaten PD unmittelbar nach Erkennen des neuen Teilnehmerstatus und Setzen der neuen Teilnehmerkennung TK an die neue Situation angepasst werden. Ein praktisches Anwendungsbeispiel dafür ist, dass, sobald ein Teilnehmer in die Rolle "Freizeit" gelangt, dieser Teilnehmer nicht mehr über sein Bürotelefon erreichbar ist, sondern über sein Privattelefon. Diese veränderte telefonische Erreichbarkeit kann beispielsweise durch Änderung des Präsenzdatums PD2 registriert werden. Da - wie oben erläutert - nach jeder Änderung der Präsenzdaten automatisch eine neue Erstellung der Präsenzanzeigedaten erfolgt, werden die diese neuen Information betreffenden Präsenzanzeigedaten PAD sofort aktualisiert und zum Abruf in dem Anzeigespeicher AS bereitgestellt.

Die Änderung des Präsenzdatums PD3 vom Wert 0 auf den Wert 1, welche das Erkennen des neuen Teilnehmerstatus und Setzen der neuen Teilnehmerkennung ausgelöst hat, kann in diesem Ausführungsbeispiel beispielsweise davon herrühren, dass der Teilnehmer sich an seinem häuslichen Computer angemeldet hat; diese Information wurde als Präsenzdatum PD3 mittels der Präsenznachricht PN3 an dem Präsenzrechner übermittelt.

In den beschriebenen Ausführungsformen des Verfahrens können die Verarbeitungsanweisungen V1, V2 und V3 jeweils nicht nur einem einzigen Nutzer, sondern auch einer Gruppe von Nutzern zugeordnet sein. Auch bei einer großen Anzahl von Dienstnutzern kann dadurch mittels einer Gruppierung dieser Nutzer (beispielsweise in drei Nutzergruppen NU1',NU2' und NU3', die an die Stelle der Nutzer NU1, NU2 und/oder NU3 treten würden) die Anzahl der benötigten Verarbeitungsanweisungen gering gehalten werden.

**Patentansprüche**

1. Verfahren zum Bereitstellen von einem Nutzer (NU1) zugeordneten Präsenzanzeigedaten (PAD1) zur Anzeige auf einem Kommunikationsendgerät (KEG1), bei dem

   - mindestens einen vorgewählten Teilnehmer betreffende Präsenzdaten (PD) für einen Präsenzrechner (PR) zugreifbar vorgehalten werden,
   - anhand einer dem Nutzer (NU1) zugeordneten Verarbeitungsanweisung (V1) unter Verarbeitung der Präsenzdaten (PD) die Präsenzanzeigedaten (PAD1) erstellt werden, und
   - die Präsenzanzeigedaten (PAD1) in einem Anzeigespeicher (AS) abgelegt werden, wodurch die Präsenzanzeigedaten (PAD1) bei einem kommunikationsendgeräteseitigen (KEG1) Abruf (AN,ABN) unmittelbar nach Auslesen aus dem Anzeigespeicher (AS) zu dem Kommunikationsendgerät (KEG1) übertragbar sind.

2. Verfahren nach Anspruch 1,
   **dadurch gekennzeichnet, dass**

   - die Verarbeitung eine Übernahme von ausgewählten Präsenzdaten (PD1, PD2, PD3) in die Präsenzanzeigedaten (PAD1) umfaßt .

3. Verfahren nach Anspruch 1 oder 2,
   **dadurch gekennzeichnet, dass**

   - die Verarbeitung ein Verändern von ausgewählten Präsenzdaten (PD3,PD6) und eine Übernahme der veränderten Präsenzdaten (PD3',PD6*) in die Präsenzanzeigedaten (PAD3) umfaßt.

4. Verfahren nach Anspruch 3,
   **dadurch gekennzeichnet, dass**

   - das Verändern der Präsenzdaten (PD6) erfolgt, indem
   - ein Vergleich der Präsenzdaten (PD6) mit in einer Datensammlung (DS) abgelegten Sammlungspräsenzdaten (S-PD) durchgeführt wird, und
   - bei einem positiven Vergleichsergebnis den Sammlungspräsenzdaten (S-PD) zugeordnete (Z1) Zuordnungsdaten (ZD) als veränderte Präsenzdaten (PD6*) verwendet werden.

5. Verfahren nach Anspruch 3 oder 4,
   **dadurch gekennzeichnet, dass**

   - das Verändern der Präsenzdaten erfolgt, indem in zweiwertiger Form vorliegende Präsenzdaten (PD3) invertiert (') werden, und
   - als geänderte Präsenzdaten die invertierten Präsenzdaten (PD3') verwendet werden.

6. Verfahren nach einem der Ansprüche 3 bis 5,
   **dadurch gekennzeichnet, dass**

   - das verändern der Präsenzdaten erfolgt, indem Präsenzdaten (PD2) durch vorbestimmte Präsenzdaten (PD2''=99) ersetzt werden, und
   - als geänderte Präsenzdaten die vorbestimmten Präsenzdaten (PD2'') verwendet werden.

7. Verfahren nach einem der vorhergehenden Ansprüche,
   **dadurch gekennzeichnet, dass**

   - die Präsenzanzeigedaten (PAD) erstellt werden, wenn eine Veränderung der für den Präsenzrechner (PR) vorgehaltenen Präsenzdaten (PD) auftritt.

8. Verfahren nach einem der vorhergehenden Ansprüche,
   **dadurch gekennzeichnet, dass**

   - die Präsenzanzeigedaten (PAD) erstellt werden, wenn eine Veränderung der in einem Anweisungsspeicher (VS) vorgehaltenen Verarbeitungsanweisungen (V) auftritt.

9. Verfahren nach einem der vorhergehenden Ansprüche,
   **dadurch gekennzeichnet, dass**

   - eine Mehrzahl an verschiedenen Präsenzanzeigedaten (PAD1,PAD2,PAD3) anhand einer Mehrzahl an Verarbeitungsanweisungen (V1,V2,V3) erstellt wird, wobei jede dieser Verarbeitungsanweisungen (V1,V2,V3) einem Nutzer (NU1,NU2,NU3) zugeordnet ist, und
   - diese Mehrzahl an Präsenzanzeigedaten (PAD1,PAD2,PAD3) in dem Anzeigespeicher (AS) abgelegt wird.

10. Verfahren nach einem der vorhergehenden Ansprüche,
    **dadurch gekennzeichnet, dass**

    - für einen Nutzer (NU2) verschiedene Verarbeitungsanweisungen (V21, V22, V23) in dem Anweisungsspeicher (VS) vorgehalten werden, und
    - aus diesen verschiedenen Verarbeitungsanweisungen (V21, V22, V23) die eine aktuell zu verwendende Verarbeitungsanweisung (V22) ermittelt wird, indem den verschiedenen Verarbeitungsanweisungen (V21, V22, V23) zugeordnete, sich jeweils unterscheidende Kennungen (K1, K2, K3) verglichen werden mit einer Teilnehmerkennung (TK), welche bei dem Präsenzrechner (PR) vorliegt und einen aktuell gültigen Teilnehmerstatus des Teilnehmers beschreibt.

**11.** Verfahren nach Anspruch 10,
**dadurch gekennzeichnet, dass**

- die Teilnehmerkennung (TK) seitens des Präsenzrechners (PR) von einem Präsenz-Kommunikationsendgerät (KEG2) des Teilnehmers empfangen wird, wobei die Teilnehmerkennung (TK) an dem Präsenz-Kommunikationsendgerät (KEG2) eingebbar ist.

**12.** Verfahren nach Anspruch 10 oder 11,
**dadurch gekennzeichnet, dass**

- die Teilnehmerkennung (TK) durch den Präsenzrechner (PR) ermittelt wird, indem ein vorbestimmtes Präsenzdatum (PD3) auf eine vorbestimmte Änderung (0→1) hin überwacht (UE) wird, und bei Auftreten dieser Änderung ein Vorliegen der Teilnehmerkennung (TK=3) erkannt wird.

**13.** Verfahren nach einem der Ansprüche 10 bis 12,
**dadurch gekennzeichnet, dass**

- nach Ermittelung der Teilnehmerkennung (TK=3) von dem Präsenzrechner (PR) der Teilnehmerkennung zugeordnete Präsenzdaten (PD2) geändert (PD2:=24) werden, woraufhin ein erneutes Erstellen der Präsenzanzeigedaten (PAD22) durchgeführt wird.

FIG 1

EP 1 395 017 A1

FIG 2

EP 1 395 017 A1

FIG 3

NU1 ← → V1

NU2 ← → V2

NU3 ← → V3  — VS

V3

AS

PD1
PD2
PD3  — PAD1

ABN3

PAD3

M

PS    PD

PN1 → PD1=17
PN2 → PD2=23
      PD3=0
      PD4=ja
      PD5=153°
PN3 → PD6=Zelle
      10435
PN4 →   ⋮

PD4
PD5
PD6  — PAD2

VE

PD1=17
PD3'=1
PD6*=
 Berlin
PD2''=99  — PAD3

PD6=
Zelle
10435

PD6*=
Berlin

PR

ZD — 

S-PD

Berlin <--Z1--> Zelle 8563 - 14536

Potsdam <--Z2--> Zelle 14537 - Zelle 16524  — DS

EP 1 395 017 A1

FIG 4

KEG2    TK=3

VS

TK=3    TKS    PR

NU2    V21(K1=5)
V22(K2=3)    =
V23(K3=7)

AS    PAD

ABN

V22    PAD22

PS
PD

PN1    PD1    PD4
PD2    PD2
PN2    PD3    PD6    PAD22
PD4
PN3    PD5    VE
PD6
PN4

EP 1 395 017 A1

FIG 5

| Europäisches | **EUROPÄISCHER TEILRECHERCHENBERICHT** | Nummer der Anmeldung |
|---|---|---|
| Patentamt | der nach Regel 45 des Europäischen Patent- übereinkommens für das weitere Verfahren als europäischer Recherchenbericht gilt | EP 03 09 0219 |

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| X | ETSI: "ETSI TS 122 141 V5.2.0 Universal Mobile Telecommuncations System (UMTS); Presence service; Stage 1 (3GPP TS 22.141 version 5.2.0 Release 5)" März 2002 (2002-03) , ETSI , INTERNAL DATABASE PDDOCSERV XP002262064 * Seite 5 * * Seite 7 - Seite 19 * * Abbildungen 1-4 * --- | 1-13 | H04L29/06 H04L12/58 |
| X | EP 1 071 295 A (PHONE COM INC) 24. Januar 2001 (2001-01-24) * Zusammenfassung * * Absatz [0001] * * Absatz [0003] * * Absatz [0006] - Absatz [0016] * * Absatz [0021] - Absatz [0022] * * Absatz [0029] - Absatz [0037] * * Absatz [0040] - Absatz [0041] * * Absatz [0054] - Absatz [0062] * * Absatz [0068] - Absatz [0070] * * Abbildungen 2A,2B,2C,3B,3C,4A,4C,4D,7A * * Ansprüche 1-4,6,9-12 * --- -/-- | 1-13 | RECHERCHIERTE SACHGEBIETE (Int.Cl.7) H04L |

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| MÜNCHEN | 19. November 2003 | Kopp, K |

**Europäisches**
**Patentamt**

## UNVOLLSTÄNDIGE RECHERCHE
## ERGÄNZUNGSBLATT C

Nummer der Anmeldung

EP 03 09 0219

Unvollständig recherchierte Ansprüche:
        1-13

Grund für die Beschränkung der Recherche (nicht patentfähige Erfindung(en)):

Artikel 52(2)(d) EPÜ) Darstellung von Information
Der Gegenstand der Ansprüche 1-13 ist gerichtet auf die Darstellung von Information ohne einen nicht trivialen technischen Effekt. Deshalb wurde für diese Ansprüche keine vollständige Recherche durchgeführt. Die Recherche basiert auf der Offenbarung der Beschreibung als Teil der Anmeldung.

**Europäisches**
**Patentamt**

**EUROPÄISCHER**
**TEILRECHERCHENBERICHT**

| Kategorie | Kennzeichnung des Dokuments mit Angabe, soweit erforderlich der maßgeblichen Teile | Betrifft Anspruch |
|---|---|---|
| X | WO 02 43351 A (AGRAWAL ANURAAG ;AT & T WIRELESS SERVICES INC (US)) 30. Mai 2002 (2002-05-30) * Zusammenfassung * * Seite 1, Zeile 22 - Seite 3, Zeile 4 * * Seite 3, Zeile 9 * * Seite 4, Zeile 11 - Zeile 12 * * Seite 4, Zeile 17 - Seite 5, Zeile 27 * * Seite 6, Zeile 23 - Seite 7, Zeile 24 * * Seite 9, Zeile 21 - Seite 15, Zeile 13 * * Abbildungen 2A,12 * * Anspruch 1 *  --- | 1-13 |
| P,X | DE 102 37 093 A (ERICSSON TELEFON AB L M) 27. Februar 2003 (2003-02-27) * Absatz [0002] - Absatz [0013] * * Absatz [0019] * * Absatz [0026] - Absatz [0034] * * Abbildung 3 *  ----- | 1-8 |

**EINSCHLÄGIGE DOKUMENTE**

**KLASSIFIKATION DER ANMELDUNG** (Int.Cl.7)

**RECHERCHIERTE SACHGEBIETE** (Int.Cl.7)

EPO FORM 1503 03.82 (P04C12)

**ANHANG ZUM EUROPÄISCHEN RECHERCHENBERICHT
ÜBER DIE EUROPÄISCHE PATENTANMELDUNG NR.**

EP 03 09 0219

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2003

| Im Recherchenbericht angeführtes Patentdokument | Datum der Veröffentlichung | Mitglied(er) der Patentfamilie | Datum der Veröffentlichung |
|---|---|---|---|
| EP 1071295 A | 24-01-2001 | CN 1282184 A<br>EP 1071295 A2<br>JP 2001078272 A | 31-01-2001<br>24-01-2001<br>23-03-2001 |
| WO 0243351 A | 30-05-2002 | AU 1979602 A<br>WO 0243351 A2<br>US 2002083127 A1 | 03-06-2002<br>30-05-2002<br>27-06-2002 |
| DE 10237093 A | 27-02-2003 | DE 10237093 A1<br>GB 2380633 A ,B<br>US 2003069934 A1 | 27-02-2003<br>09-04-2003<br>10-04-2003 |

EPO FORM P0461

Für nähere Einzelheiten zu diesem Anhang : siehe Amtsblatt des Europäischen Patentamts, Nr.12/82